# EUROPEAN PATENT APPLICATION

(11) **EP 4 270 896 A1**
(43) Date of publication of application: **01.11.2023**
(21) Application number: 21916847.3
(22) Date of filing: 08.01.2021
(51) Int. Cl.: H04L 45/00, H04L 9/40

(54) **SWITCHING SYSTEM, SWITCHING NETWORK AND SWITCHING NODE**

(71) Applicant: Huawei Technologies Co., Ltd., Shenzhen, Guangdong 518129 (CN)
(72) Inventor: LAM, Wan, Shenzhen, Guangdong 518129 (CN); ZHANG, Xiaolei, Shenzhen, Guangdong 518129 (CN)
(74) Representative: Gill Jennings & Every LLP
(86) International application number: PCT/CN2021/070957
(87) International publication number: WO 2022/147792

(57) **Abstract**

This application provides a switching system, a switching network, and a switching node. The switching system may include a first node and a second node, where one first node is connected to at least one second node; the first node is configured to: communicate with user equipment, and communicate with the second node according to a first protocol; and the second node is configured to: communicate with the first node according to the first protocol, and communicate with a third node in another switching system according to a second protocol, where the first protocol is different from the second protocol. In this application, the foregoing switching system may not only meet a requirement of efficient switching, but also meet a requirement of high scalability, and both high performance and scalability are considered.

## Description

### TECHNICAL FIELD

This application relates to the field of computer technologies, and in particular, to a switching system, a switching network, and a switching node.

### BACKGROUND

With the development of science and technology, application of technologies such as cloud computing, big data, and virtualization is increasing. These technologies are implemented over a switching network.

Traffic in the switching network is characterized by centralized switching data and increasing traffic. Therefore, further requirements such as large scale, high scalability, and high performance are imposed on the switching network. However, due to limitation of a network protocol in the switching network, how to balance the scalability and the high performance is an urgent problem to be resolved.

### SUMMARY

This application provides a switching system, a switching network, and a switching node, to balance scalability and high performance of the switching network.

According to a first aspect, this application provides a switching system. The switching system may be applied to, for example, a 2-layer switching network, a 3-layer switching network, or a switching network at more layers. The switching system may include a first node and a second node, where one first node is connected to at least one second node; the first node is configured to: communicate with user equipment, and communicate with the second node according to a first protocol; and the second node is configured to: communicate with the first node according to the first protocol, and communicate with a third node in another switching system according to a second protocol, where the first protocol is different from the second protocol.

The first node may be understood as a bottom-layer node, and the second node may be understood as a top-layer node. It should be noted that the bottom-layer node may be a fabric interface chip, and one or more fabric interface chips may be disposed on a same line card or different line cards. The top-layer node may be a switch element, and one or more switch elements may be disposed on a same fabric card or different fabric cards or switch cards. Certainly, one switch element may alternatively be an independent switching device. This is not specifically limited in this application.

In some possible implementations, the top-layer node may be some or all of a plurality of top-layer nodes in the switching system. In other words, some top-layer nodes in the switching system may communicate with another switching system, or all top-layer nodes in the switching system may communicate with another switching system.

Optionally, the first protocol may be a proprietary protocol of a current switching system, and the second protocol may be a public protocol; or the first protocol may be a proprietary protocol of a current switching system, and the second protocol may be a proprietary protocol in another switching system. Certainly, the first protocol and the second protocol may be different public protocols.

In this application, because internal nodes of the switching system communicate with each other through the proprietary protocol, bandwidth utilization may be improved, a switching delay may be reduced, and performance of the switching system may be improved. In addition, because the switching system is interconnected with another switching system through the top-layer node, larger-scale expansion is implemented, scalability of the switching system is improved, and occupation of a user-side port is avoided. It may be learned that the foregoing switching system may not only meet a requirement of efficient switching, but also meet a requirement of high scalability, and both high performance and scalability are considered.

In some possible implementations, the first node is configured to: receive a first data packet from the user equipment, and send the first data packet to the second node according to the first protocol; and the second node is configured to: receive the first data packet from the first node, and send the first data packet to the third node according to the second protocol, where the second node and the third node are nodes in a transmission path of the first data packet. In this way, the switching system may implement the larger-scale expansion through the top-layer node, improve the scalability of the switching system, and avoid the occupation of the user-side port.

In some possible implementations, the switching system further includes a fourth node, one first node is connected to at least one fourth node, and one fourth node is connected to at least one second node; and the fourth node is configured to communicate with the first node and the second node according to the first protocol.

Further, the first node is further configured to send the first data packet from the user equipment to the fourth node according to the first protocol; and the fourth node is further configured to: receive the first data packet from the first node, and send the first data packet to the second node according to the first protocol, where the fourth node is a node in the transmission path of the first data packet.

In this application, the fourth node may be understood as an intermediate node, and may be implemented by using a switch element. The switching system may be further expanded by disposing the intermediate node between the bottom-layer node and the top-layer node.

Optionally, the switching system may further include intermediate nodes at one layer or more layers. In other words, more intermediate nodes may be further disposed between the bottom-layer node and the top-layer node, to implement multi-layer switching.

In some possible implementations, the first node is further configured to: receive a second data packet from the user equipment, and send the second data packet to the second node according to the first protocol; and the second node is further configured to: receive the second data packet from the first node, and send the second data packet to another first node according to the first protocol, where the second node is a node in a transmission path of the second data packet.

In this application, because the first node and the second node communicate with each other through a same protocol (for example, the proprietary protocol), the second node does not need to re-encapsulate a data packet, but directly forwards the data packet. This improves bandwidth utilization, reduces a switching delay, and further improves performance of the switching system.

According to a second aspect, this application further provides a switching network, which may be applied to an apparatus such as a switch, a switching chip, a switching frame, and the like. The switching network may include the switching system described in one or more of the foregoing embodiments.

The switching network may include: a first switching system and a second switching system, where the first switching system includes a first node and a second node, where one first node is connected to at least one second node; the second switching system includes a third node and a fifth node, where one third node is connected to one second node, and one fifth node is connected to at least one third node;
the first node is configured to: communicate with user equipment, and communicate with the second node according to a first protocol; and the second node is configured to: communicate with the first node according to the first protocol, and communicate with the third node according to a second protocol; and the third node is configured to: communicate with the second node according to the second protocol, and communicate with the fifth node based on the third protocol, where the first protocol is different from the second protocol, and the second protocol is different from the third protocol.

The first node may be understood as a bottom-layer node in the first switching system, the second node may be understood as a top-layer node in the first switching system, the third node may be understood as a top-layer node in the second switching system, and the fifth node may be understood as a bottom-layer node in the second switching system.

Optionally, the first switching system and the second switching system may be switching systems of equal scales, or may be switching systems of different scales. For example, both the first switching system and the second switching system may be small-scale switching systems; or the first switching system may be a small-scale switching system, and the second switching system may be a large-scale switching system; or both the first switching system and the second switching system may be large-scale switching systems. The small-scale switching system may be a switching system whose node capacity is less than a preset value, and the large-scale switching system may be a switching system whose node capacity is greater than or equal to the preset value.

During actual application, the first protocol may be a proprietary protocol of the first switching system, the second protocol may be a public protocol, the third protocol may be a proprietary protocol of the second switching system, and the first protocol may be the same as or different from the third protocol; or the first protocol, the second protocol, and the third protocol are different proprietary protocols. Certainly, the first protocol, the second protocol, and the third protocol may alternatively be different public protocols. This is not specifically limited in embodiments of this application. The following uses an example in which the first protocol may be the proprietary protocol of the first switching system, the second protocol may be the public protocol, and the third protocol may be the proprietary protocol of the second switching system.

In some possible embodiments, the first node is further configured to: receive a first data packet from the user equipment, and send the first data packet to the second node according to the first protocol; and the second node is further configured to: receive the first data packet from the first node, and send the first data packet to the third node according to the second protocol, where the third node is further configured to: receive the first data packet from the second node, and send the first data packet to the fifth node according to the third protocol, where the second node, the third node, and the fifth node are nodes in a transmission path of the first data packet.

In some possible embodiments, the switching network further includes a sixth node, where the sixth node is connected between the second node and the third node; and the sixth node is configured to: communicate with the second node and the third node according to the second protocol.

In some possible embodiments, the second node is further configured to send the first data packet to the sixth node according to the second protocol; and the sixth node is further configured to: receive the first data packet from the second node, and send the first data packet to the third node according to the second protocol, where the sixth node is a node in the transmission path of the first data packet.

In some possible embodiments, a node capacity of the first switching system is less than a preset value, and a node capacity of the second switching system is greater than or equal to the preset value.

In some possible embodiments, the second node is at least a part of top-layer nodes in the first switching system; and/or the third node is at least a part of top-layer nodes in the second switching system.

According to a third aspect, this application provides a switching node. The switching node may be applied to the top-layer node in the foregoing one or more embodiments.

The switching node may include: a first port that supports a first protocol, a second port that supports a second protocol, and a processor, where the processor is connected to the first port and the second port; the first protocol is different from the second protocol;
the first port is configured to: receive a third data packet, and send the third data packet to the processor, where the third data packet is a data packet sent by a first node according to the first protocol, and the first node is configured to communicate with user equipment according to the first protocol;
the processor is configured to: convert the third data packet from the first protocol to the second protocol, and send the converted third data packet to the second port; and
the second port is configured to send the converted third data packet to another switching node.

It should be understood that the technical solutions in the second aspect and the third aspect of this application are consistent with the technical solution in the first aspect. Beneficial effects achieved in the various aspects and corresponding feasible implementations are similar, and details are not described again.

### BRIEF DESCRIPTION OF DRAWINGS

To describe the technical solutions in embodiments of this application more clearly, the following describes the accompanying drawings used in describing embodiments of this application or the background.
FIG. 1 is a schematic diagram of hardware of a switching network according to an embodiment of this application;
FIG. 2 is a schematic diagram of a structure of a 2-layer switching network according to an embodiment of this application;
FIG. 3 is a schematic diagram of a structure of a 3-layer switching network according to an embodiment of this application;
FIG. 4 is a schematic diagram of a structure of a DCN according to an embodiment of this application;
FIG. 5 is a schematic diagram of a structure of a switching system according to an embodiment of this application;
FIG. 6 is another schematic diagram of a structure of a layer 2 switching system according to an embodiment of this application;
FIG. 7 is another schematic diagram of a structure of a switching system according to an embodiment of this application;
FIG. 8 is another schematic diagram of a structure of a layer 3 switching system according to an embodiment of this application;
FIG. 9 is a schematic diagram of a structure of a switching network according to an embodiment of this application;
FIG. 10 is another schematic diagram of a structure of a switching network according to an embodiment of this application;
FIG. 11 is a schematic diagram of a structure of a switching node according to an embodiment of this application; and
FIG. 12 is a schematic diagram of a structure of a processor according to an embodiment of this application.

### DESCRIPTION OF EMBODIMENTS

The following describes embodiments of this application with reference to the accompanying drawings in embodiments of this application. In the following description, reference is made to the accompanying drawings that form a part of this application and in which specific aspects of embodiments of this application are shown by way of illustration or specific aspects of embodiments of this application may be used. It should be understood that embodiments of this application may be used in other aspects, and may include structural or logical changes that are not shown in the accompanying drawings. Therefore, the following detailed description should not be construed in a limiting sense. Further, it should be understood that features of example embodiments and/or aspects described herein may be combined with each other, unless expressly stated otherwise.

With the development of science and technology, application of technologies such as cloud computing, big data, and virtualization is increasing. These technologies are implemented over a switching network. Traffic in the switching network is characterized by centralized switching data and increasing traffic. Therefore, further requirements such as large scale, high scalability, and high performance are imposed on the switching network. The switching network may be understood as a switch fabric (switch fabric, SF), a data center network (data center network, DCN), or the like.

During actual application, to expand the switching network, one switching network may be expanded from one single node. For example, a switching chip or switch box that may provide 24 10-Gbps Ethernet ports in one single node setup, or a switching frame that may provide 512 100-Gbps ports. During actual application, the switching chip, the switch box, or the switching frame may include a plurality of line cards (line card, LC) and a plurality of fabric cards (fabric card, FC) or switch cards (switch card, SC). At least one fabric interface chip (fabric interface, FIC) is disposed on the line card, and at least one switch element (switch element, SE) is disposed on the fabric card or the switch card.

In a data transmission process, first, the FIC receives a data packet sent by user equipment, and forwards the data packet to a corresponding SE based on a destination address of the data packet. Then, the SE may forward the received data packet to a next SE connected to the SE or a downlink FIC (namely, an egress FIC). The data packet may include a variable-length data packet (variable-length packet), a fixed-length cell (fixed-length cell), and the like.

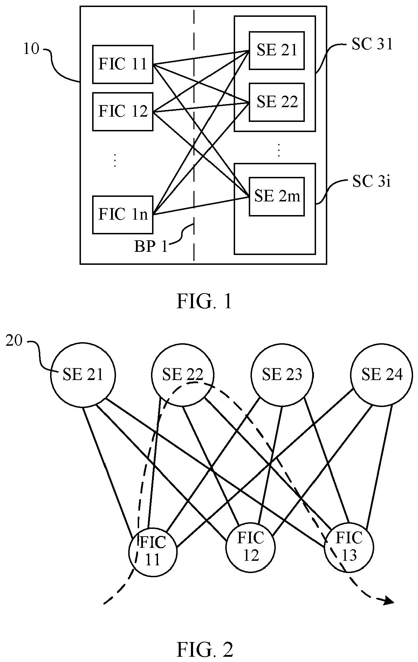

FIG. 1 is a schematic diagram of hardware of a switching network according to an embodiment of this application. In FIG. 1, the switching network 10 may include n FICs and m SEs (n and m are positive integers). The n FICs may include an FIC 11, an FIC 12, ..., and an FIC In, and the m SEs may include an SE 21, an SE 22, ..., and an SE 2m. The n FICs may be connected to the m SEs through a backplane (backplane) or through an optical fiber. For example, as shown in FIG. 1, the FIC 11 may be connected to the m SEs through a backplane BP 1, the FIC 12 may be connected to the m SEs through the backplane BP 1, and the method can be deduced by analogy. The FIC 1n may be connected to the m SEs through the backplane BP 1. It may be understood that each FIC may be connected to one or more SEs, to be specific, one FIC may be connected to a part of SEs, or may be fully connected to SEs.

During actual application, the m SEs may be disposed on one or more FCs, SCs, or independent switching devices. For example, as shown in FIG. 1, the SE 21 and the SE 22 may be disposed on an SC 31, and other SEs may be disposed on different SCs. For example, the SE 2m may be disposed on an SC 3i (to be specific, the i^{th} switch card, where i is a positive integer).

In some possible implementations, the switching network may include one or more layers of SEs, to form a 2-layer switching network, a 3-layer switching network, and the like.

In some possible implementations, the n FICs in the 2-layer switching network may be understood as bottom-layer nodes (which may also be referred to as leaf (leaf) nodes or edge (edge) nodes), and the m SEs may be understood as top-layer nodes (which may also be referred to as spine (spine) nodes). For example, FIG. 2 is a schematic diagram of a structure of a 2-layer switching network according to an embodiment of this application. Refer to FIG. 2. The switching network 20 may include three FICs (namely, an FIC 11, an FIC 12, and an FIC 13) and four SEs (namely, an SE 21, an SE 22, an SE 23, and an SE 24). Three FICs are fully connected to four SEs.

For example, with reference to the 2-layer switching network shown in FIG. 2, the FIC 11 externally provides a plurality of 100-Gbps Ethernet ports. In this case, refer to a transmission path of a data packet shown by a dotted line in FIG. 2. User equipment sends a to-be-switched data packet to the FIC 11, and after receiving the data packet from an Ethernet port, the FIC 11 performs a series of processing on the data packet, such as packet parsing, route selection, and packet header modification. Then, the FIC 11 forwards processed data packet to the SE 22, where the data packet, when being sent, usually carries a destination address (for example, destination FIC information). The SE 22 forwards the data packet to the FIC 13 based on the destination address carried in the data packet, so that data exchange is completed.

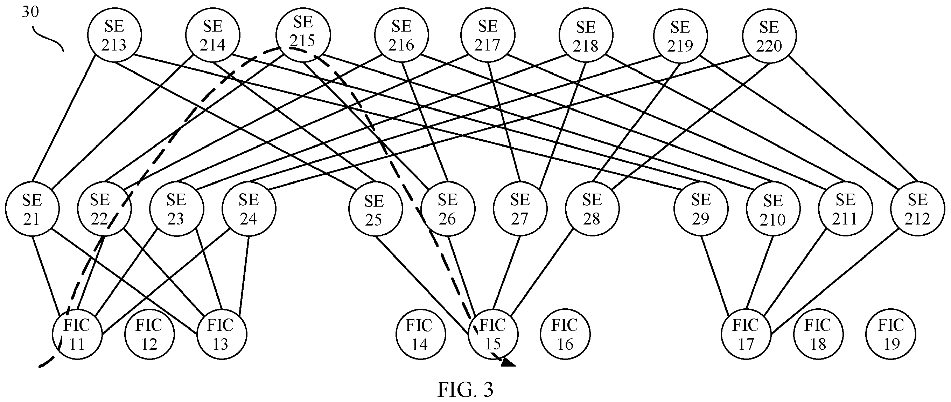

In another embodiment, n FICs in a 3-layer switching network may be understood as bottom-layer nodes, a part of m SEs may be understood as intermediate nodes, and the other SEs may be understood as top-layer nodes. For example, FIG. 3 is a schematic diagram of a structure of a 3-layer switching network according to an embodiment of this application. Refer to FIG. 3. The switching network 30 may include nine FICs (namely, an FIC 11 to an FIC 19) and 20 SEs (namely, an SE 21 to an SE 220). The SE 21 to an SE 212 are intermediate nodes, and an SE 213 to the SE 220 are top-layer nodes. The nine FICs are fully connected to the SE 21 to the SE 212, and the SE 21 to the SE 212 are partially or completely connected to the SE 213 to the SE 220.

For example, with reference to the 3-layer switching network shown in FIG. 3, the FIC 11 externally provides a plurality of 100-Gbps Ethernet ports. In this case, refer to a transmission path of a data packet shown by a dotted line in FIG. 3. User equipment sends a to-be-switched data packet to the FIC 11, and after receiving the data packet from an Ethernet port, the FIC 11 performs a series of processing on the data packet, such as packet parsing, route selection, and packet header modification. Then, the FIC 11 forwards processed data packet to an SE 22 (the intermediate node), where the data packet, when being sent, usually carries a destination address. The SE 22 forwards the data packet based on the destination address carried in the data packet. The data packet sequentially passes through an SE 215 (the top-layer node) and an SE 26 (the intermediate node), and arrives at an FIC 15. In this way, data exchange is completed.

During actual application, in the foregoing 3-layer switching network, the FIC 11 to an FIC 13 and the SE 21 to an SE 24 may belong to a first switching system, an FIC 14 to an FIC 16 and an SE 25 to an SE 28 may belong to a second switching system, and an FIC 17 to an FIC 19 and an SE 29 to an SE 212 may belong to a third switching system.

During actual application, the nodes in the switching network may be provided by a same vendor. In this case, to improve processing efficiency of the switching network, the nodes may communicate with each other by using a proprietary protocol (which may also be referred to as a user-defined protocol) that is different from a public protocol (which may also be referred to as a standard protocol). The proprietary protocol may specify a link rate, a data packet format, mutually transmitted control information, and the like.

It should be noted that in embodiments of this application, the public protocol may be a general standard protocol, namely, a protocol that complies with an Ethernet standard, for example, an Ethernet (Ethernet) protocol, an internet protocol (internet protocol, IP), a transmission control protocol (transmission control protocol, TCP), or an evolved version thereof. The proprietary protocol may be a specific network protocol, namely, a protocol defined by each vendor. Certainly, the public protocol and the proprietary protocol may further include another protocol. This is not specifically limited in embodiments of this application.

Further, because the nodes in the foregoing switching network communicate with each other by using the proprietary protocol, for example, if a data packet on which FIC processing is processed already carries the destination address, a subsequent SE may directly forward the data packet by using the destination address. There is no need to repeat processing on a second layer (a layer 2, L2) or a third layer (a layer 3, L3) in the FIC for the public protocol to obtain the destination address, so that a design of the SE may be greatly simplified and a delay may be reduced.

However, the proprietary protocol is usually designed for a specific application scenario and focuses on improving overall efficiency of the switching network, such as high bandwidth utilization, simplified design, and lower switching delay. However, to reduce implementation difficulty and overheads, such a switching network has a disadvantage of insufficient scalability, to be specific, a maximum quantity of nodes that may be supported by the switching network is limited, and networking manners (such as clos networking) that may be supported are limited. Therefore, a switching network using the proprietary protocol cannot be further expanded when being expanded to a specific scale (for example, 1024 FICs). If further expansion is required, a user-side port (for example, for a port in the FIC, refer to an FIC 7 to an FIC 9 in FIG. 3) may be interconnected with other switching networks or switching systems according to the public protocol, to form a network including a plurality of switching networks or switching systems, such as the 3-layer switching network shown in FIG. 3. However, for such a switching network, a port bandwidth that may be originally used for communication with a user is occupied. In addition, overall efficiency of a network formed through interconnection of a plurality of systems according to the public protocol is usually lower than overall efficiency of a system using the proprietary protocol. For example, a switching system that supports TCP/IP lacks an efficient backpressure mechanism, and a TCP protocol layer on a user side may retransmit packets only through packet dropping (packet dropping), resulting in a waste of bandwidth, an extra delay and the like.

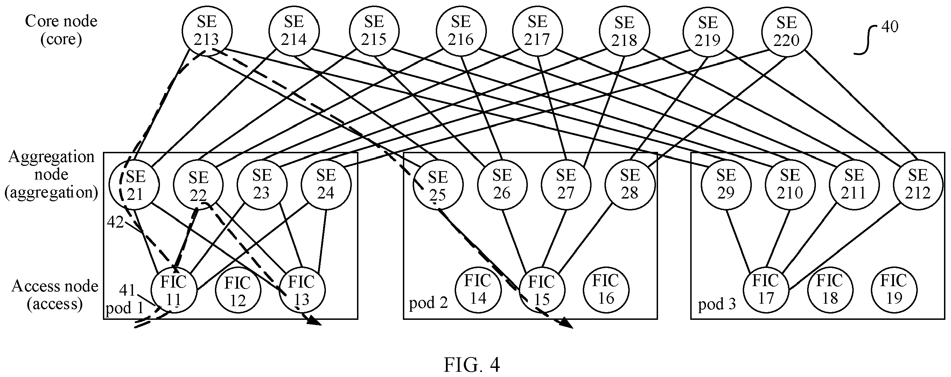

In another embodiment, to improve scalability of the switching network, nodes in the switching network may further communicate with each other by using the public protocol. In this case, the switching network may be understood as a DCN, and the DCN usually uses a fat-tree (fat-tree) networking manner. FIG. 4 is a schematic diagram of a structure of a DCN according to an embodiment of this application. Refer to FIG. 4. A structure of the DCN is similar to a structure of the foregoing 3-layer switching network, and may include a bottom-layer node, an intermediate node, and a top-layer node. The bottom-layer node may also be referred to as an access node (an access node) or a top of rack (top of rack, TOR) node, such as an FIC 11 to an FIC 19; the intermediate node may also be referred to as an aggregation (aggregation) node, for example, an SE 21 to an SE 212; and the top-layer node may also be understood as a core (core) node, for example, an SE 213 to an SE 220.

Similar to the foregoing 3-layer switching network, the FIC 11 to an FIC 13 and the SE 21 to an SE 24 may belong to a pod (point of delivery) 1, an FIC 14 to an FIC 16 and an SE 25 to an SE 28 may belong to a pod 2, and an FIC 17 to the FIC 19 and an SE 29 to the SE 212 may belong to a pod 3.

For example, a bandwidth of a downlink (downlink) port of the access node may be 10 Gbps, and the downlink port is connected to user equipment (for example, a server). A bandwidth of an uplink (uplink) port of the access node may be 40 Gbps, and the uplink port is connected to an aggregation node. A downlink port of the aggregation node is connected to the access node, and an uplink port of the aggregation node is connected to different core nodes. An aggregation node and an access node in the same pod are generally fully connected.

During actual application, the aggregation node is configured to complete communication between different access nodes in the same pod. For example, an SE 22 is configured to complete communication between the FIC 11 and the FIC 13. Still refer to a transmission path 41 of a data packet in the pod shown in FIG. 4. A transmission path of a data packet between the FIC 11 and the FIC 13 is shown by a dashed line in FIG. 4.

Further, the core node is configured to complete communication between different nodes that cross pods. For example, the SE 213 is configured to complete communication between the FIC 11 in the pod 1 and an FIC 15 in the pod 2. Refer to a transmission path 42 in FIG. 4 on which the data packet is transmitted across pods. The data packet is accessed by the FIC 11, sequentially passes through the SE 21, the SE 213, and the SE 25, and finally arrives at the FIC 15.

It should be noted that the foregoing pod (for example, the pod 1) may include different aggregation nodes (for example, the SE 21 to the SE 24) that are respectively connected to different core planes (core planes). The plane may be defined as a core node that is directly connected to the same aggregation node. In this case, in FIG. 4, the core node may be divided into four planes, and each plane is separately and directly connected to different aggregation nodes in each pod.

Further, in a DCN, nodes communicate with each other according to a public protocol, for example, an Ethernet protocol between the access node and the aggregation node, or an IP protocol between the aggregation node and the core node. Based on public protocols between different nodes, a large-scale switching network may be set up, for example, a switching network supporting 100,000 servers.

During actual application, because the DCN is networked through a plurality of switching systems, nodes in these switching systems are independent of each other, and nodes at different layers communicate with each other according to the public protocol. As a result, different nodes in the DCN lack effective communication mechanisms such as flow control, load balancing, fault detection, and switching, and overall operating efficiency of the switching network is low. In addition, each node repeats processing of a standard protocol, which increases design difficulty and a processing delay.

In this case, to resolve the foregoing problem, embodiments of this application provide a switching system. The switching system may be applied to the 2-layer switching network or the 3-layer switching network described above. Certainly, the switching system may alternatively be applied to a switching network networked in another networking manner. This is not specifically limited in embodiments of this application.

In some possible implementations, the switching system provided in embodiments of this application may include a bottom-layer node (for example, a first node) and a top-layer node (for example, a second node). The bottom-layer node is connected to one or more top-layer nodes.

The bottom-layer node is configured to: communicate with user equipment, and communicate with the top-layer node according to a first protocol; and the top-layer node is configured to: communicate with the bottom-layer node according to the first protocol, and communicate with another switching system according to a second protocol. The first protocol is different from the second protocol.

It should be noted that a difference between the first protocol and the second protocol may be understood as follows: The first protocol and the second protocol are communication protocols with different protocol names; or the first protocol and the second protocol are different versions of communication protocols with a same protocol name; or the first protocol and the second protocol are communication protocols defined by different vendors. Certainly, there may alternatively be another case between the first protocol and the second protocol, provided that a data transmission manner, a data encapsulation manner (which may also be understood as a frame structure) and the like of the first protocol are different from those of the second protocol. This is not specifically limited in embodiments of this application.

For example, the first protocol may be a proprietary protocol defined by a vendor A of each node in a current switching system, and the second protocol may be the public protocol (for example, an IP protocol); or the first protocol may be a proprietary protocol defined by vendor A of each node in a current switching system, and the second protocol may be a proprietary protocol defined by a vendor B of each node in another switching system; or the first protocol may be a version of a proprietary protocol defined by a vendor A, and the second protocol is another version of the proprietary protocol defined by the vendor A. A node of a current switching system and a node of another switching system may be provided by a same vendor (the vendor A). Certainly, the first protocol and the second protocol may alternatively be public protocols with different protocol names (for example, IP and TCP) or public protocols with different protocol versions (for example, IPv4 and IPv6). This is not specifically limited in embodiments of this application. The following uses an example in which the first protocol is the proprietary protocol of the current switching system and the second protocol is the public protocol.

During actual application, the bottom-layer node may be an FIC, and one or more FICs may be disposed on a same LC or different LCs. The top-layer node may be an SE, and one or more SEs may be disposed on a same FC or SC or different FCs or SCs. Certainly, one or more SEs may further be disposed on a same or different switching devices, for example, a server, a router, or a switch.

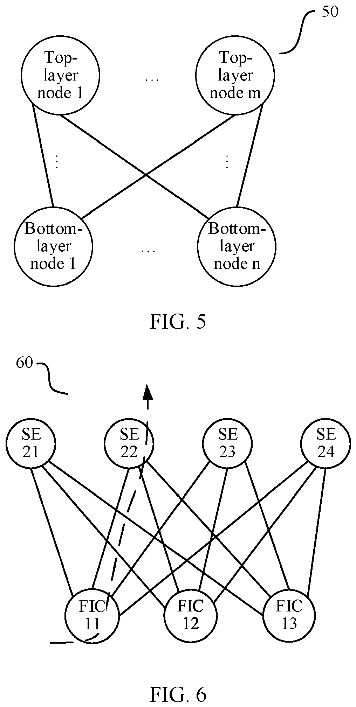

For example, FIG. 5 is a schematic diagram of a structure of a switching system according to an embodiment of this application. The switching system 50 may include bottom-layer nodes 1 to n and top-layer nodes 1 to m. Uplink ports of the bottom-layer nodes 1 to n are configured to receive a data packet from user equipment, and send the data packet to the top-layer node; and a downlink port is configured to receive the data packet from the top-layer node, and send the data packet to the user equipment. Uplink ports of the top-layer nodes 1 to m are configured to receive a data packet from the bottom-layer node; and the downlink port is configured to send the data packet to another bottom-layer node or another switching system.

In some possible implementations, the top-layer nodes 1 to m may be some or all of a plurality of top-layer nodes in the switching system 50. In other words, in the switching system 50, some top-layer nodes may communicate with another switching system, or all top-layer nodes may communicate with another switching system.

With reference to the structure of the foregoing switching system, one node in the bottom-layer nodes 1 to n receives a first data packet sent by the user equipment, and parses the first data packet, to obtain a destination address. Then, the bottom-layer node encapsulates the first data packet according to a first protocol, and sends the encapsulated first data packet to a top-layer node (the top-layer node may be one of top-layer nodes 1 to m) in a transmission path of the first data packet based on the destination address. Next, the top-layer node re-encapsulates the first data packet according to a second protocol, and sends the re-encapsulated first data packet to the top-layer node in another switching system in the transmission path of the first data packet based on the destination address.

In some other possible implementations, one of the bottom-layer nodes 1 to n receives a second data packet sent by the user equipment, and parses the second data packet, to obtain the destination address. Then, the bottom-layer node encapsulates the second data packet according to the first protocol, and sends the encapsulated second data packet to the top-layer node (the top-layer node is one of the top-layer nodes 1 to m) in a transmission path of the second data packet based on the destination address. Next, the top-layer node directly sends the second data packet to a destination bottom-layer node of the second data packet based on the destination address.

For example, a layer 2 switching system is used as an example. FIG. 6 is another schematic diagram of a structure of a layer 2 switching system according to an embodiment of this application. Refer to FIG. 6. The switching system 60 may include three bottom-layer nodes, for example, an FIC 11, an FIC 12, and an FIC 13, and four top-layer nodes, such as an SE 21, an SE 22, an SE 23, and an SE 24.

In this case, after receiving a data packet from user equipment, the FIC 11 parses the data packet, to obtain destination FIC information of the data packet. Then, the data packet is encapsulated according to a proprietary protocol (namely, a first protocol) of a current switching system. Next, the FIC 11 sends the encapsulated data packet to the SE 22 based on destination FIC information. The SE 22 re-encapsulates the data packet based on the destination FIC information according to a public protocol (namely, a second protocol), and sends the encapsulated data packet to a top-layer node (for example, a third node) in another switching system, so that the switching system may implement larger-scale expansion through the top-layer node, improves scalability of the switching system, and avoids occupation of a user-side port.

In some possible implementations, after the FIC 11 sends the encapsulated data packet to the SE 22 based on the destination FIC information, the SE 22 directly sends the encapsulated data packet to the FIC 13 based on the destination FIC information. In this case, because the SE 22 communicates with the FIC 11 and the FIC 13 through the proprietary protocol, the SE 22 does not need to re-encapsulate the data packet, but directly forwards the data packet. This improves bandwidth utilization, reduces a switching delay, and further improves performance of the switching system.

In some possible implementations, the foregoing switching system may be further expanded, to form a larger switching network. In this case, the switching network may further include: an intermediate node (for example, a fourth node). One bottom-layer node is connected to one or more intermediate nodes, and one intermediate node is connected to one or more top-layer nodes.

Correspondingly, the bottom-layer node is further configured to: communicate with user equipment, and communicate with the intermediate node according to the first protocol; the intermediate node is configured to: communicate with the bottom-layer node and the top-layer node according to the first protocol; and the top-layer node is configured to: communicate with the bottom-layer node according to the first protocol, and communicate with another switching system according to a second protocol. The first protocol is different from the second protocol.

It should be noted that during actual application, the intermediate node may be an SE, and one or more SEs may be disposed on a same fabric card or different fabric cards or switch cards.

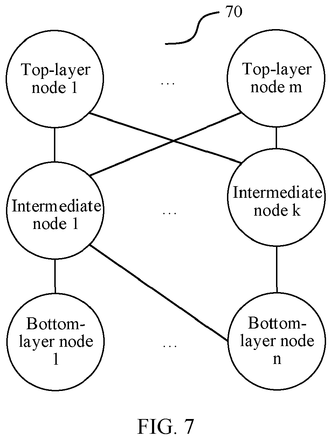

For example, FIG. 7 is another schematic diagram of a structure of a switching system according to an embodiment of this application. The switching system 70 may include bottom-layer nodes 1 to n, intermediate nodes 1 to k, and top-layer nodes 1 to m. Uplink ports of the bottom-layer nodes 1 to n are configured to receive a data packet from user equipment, and send the data packet to the intermediate node; and a downlink port is configured to receive the data packet from the intermediate node, and send the data packet to the user equipment. Uplink ports of the intermediate nodes 1 to k are configured to receive the data packet from the user equipment, and send the data packet to the intermediate node. A downlink port is configured to receive the data packet from the intermediate node, and send the data packet to the user equipment. Uplink ports of the top-layer nodes 1 to m are configured to receive the data packet from the intermediate node; and the downlink port is configured to send the data packet to another intermediate node or another switching system. The uplink ports of the intermediate nodes 1 to k are configured to receive the data packet from the bottom-layer node. Downlink ports of the top-layer nodes 1 to m are configured to communicate with another switching system. The uplink ports of the top-layer nodes 1 to m are configured to receive the data packet from the bottom-layer node. The downlink port is configured to send the data packet to another bottom-layer node or another switching system.

In some possible implementations, the top-layer nodes 1 to m may be some or all of a plurality of top-layer nodes in the switching system 50. In other words, in the switching system 70, some top-layer nodes may communicate with another switching system, or all top-layer nodes may communicate with another switching system.

With reference to the structure of the foregoing switching system, one node in the bottom-layer node receives a first data packet sent by the user equipment, and parses the first data packet, to obtain a destination address. Then, the bottom-layer node encapsulates the first data packet according to a first protocol based on the destination address, and sends the encapsulated first data packet to the intermediate node (the intermediate node is one of the intermediate nodes 1 to k) in a transmission path of the first data packet. Next, the intermediate node sends the first data packet to the top-layer node (the top-layer node is one of the top-layer nodes 1 to m) in the transmission path of the first data packet. Finally, the top-layer node re-encapsulates the first data packet according to a second protocol, and sends the first data packet to the top-layer node in another switching system in the transmission path of the first data packet based on the destination address.

In some other possible implementations, one of the bottom-layer nodes 1 to n receives a second data packet sent by the user equipment, and parses the second data packet, to obtain the destination address. Then, the bottom-layer node encapsulates the second data packet according to the first protocol, and sends the encapsulated second data packet to the intermediate node (the intermediate node is one of the top-layer nodes 1 to k) in the transmission path of the second data packet based on the destination address. Next, the intermediate node sends the second data packet to the top-layer node (the top-layer node is one of the top-layer nodes 1 to m) in the transmission path of the second data packet. Finally, the top-layer node directly sends the second data packet to a destination bottom-layer node of the second data packet based on the destination address.

Optionally, the switching system may further include intermediate nodes at one layer or more layers. In other words, more intermediate nodes may be further disposed between the bottom-layer node and the top-layer node, to implement multi-layer switching.

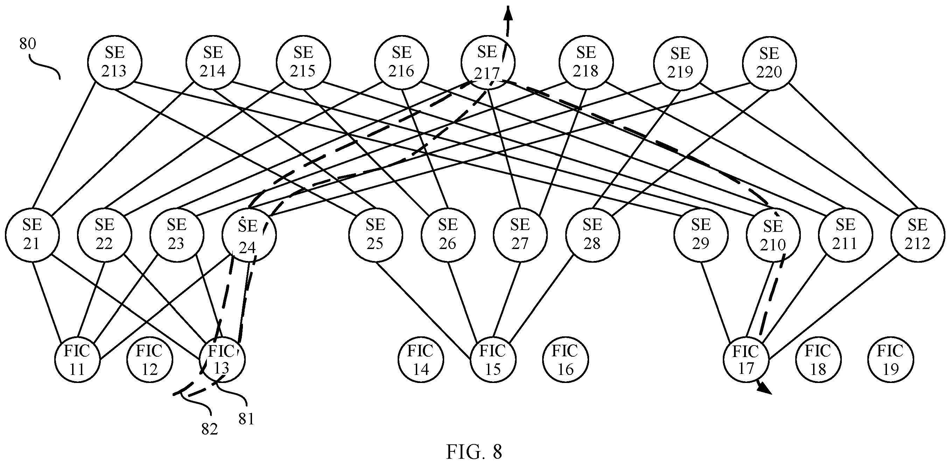

For example, a layer 3 switching system is used as an example. FIG. 8 is another schematic diagram of a structure of a layer 3 switching system according to an embodiment of this application. Refer to FIG. 8. The switching system 80 may include nine bottom-layer nodes, such as an FIC 11 to an FIC 19, 12 intermediate nodes, such as an SE 21 to an SE 212, and eight top-layer nodes such as an SE 213 to an SE 220.

Then, refer to a transmission path 81 of data shown in FIG. 8. After receiving a data packet from user equipment, an FIC 13 parses the data packet, to obtain destination FIC information of the data packet. Then, the FIC 13 encapsulates the data packet according to a proprietary protocol (namely, a first protocol) of a current switching system. The FIC 13 sends the encapsulated data packet to an SE 24 based on destination FIC information, and the SE 24 directly sends the data packet to an SE 217 based on the destination FIC information. Next, the SE 217 re-encapsulates the data packet based on the destination FIC information according to a public protocol (namely, a second protocol), and sends the encapsulated data packet to a top-layer node in another switching system, so that the switching system may implement larger-scale expansion through a top-layer node, improves scalability of the switching system, and avoids occupation of a user-side port.

In some possible implementations, refer to a data transmission path 82 shown in FIG. 8. After receiving the data packet from user equipment, the FIC 13 parses the data packet, to the obtain destination FIC information of the data packet. Then, the FIC 13 encapsulates the data packet according to the proprietary protocol (namely, the first protocol) of the current switching system. The FIC 13 sends the encapsulated data packet to the SE 24 based on the destination FIC information. Then, the SE 24 directly sends the data packet to the SE 217 based on the destination FIC information, and then the SE 217 sends the data packet to an SE 210 based on the destination FIC information. Next, the SE 210 sends the data packet to an FIC 17 based on the destination FIC information. In this case, because the SE 24, the SE 210, the SE 217, the FIC 13, and the FIC 17 all perform communication through the proprietary protocol, the SE 24, the SE 210, and the SE 217 do not need to re-encapsulate the data packet, but directly forward the data packet. This improves bandwidth utilization, reduces a switching delay, and further improves performance of the switching system.

In some possible implementations, when a node capacity of the foregoing switching system (may also be understood as a quantity of nodes in the switching system) reaches a preset value (for example, 20,000, 40,000, 100,000, or the like), the top-layer node in the foregoing switching system may be interconnected with a top-layer node in another switching system, to expand into a larger-scale switching network. The preset value may be set based on a specific application scenario. This is not specifically limited in embodiments of this application.

It should be noted that the top-layer node in the foregoing embodiment may be understood as some top-layer nodes in the switching system, or may be understood as all top-layer nodes in the switching system. This is not specifically limited in embodiments of this application.

It may be learned from the foregoing description that because internal nodes of the switching system communicate with each other through the proprietary protocol, bandwidth utilization may be improved, a switching delay may be reduced, and performance of the switching system may be improved. In addition, because the switching system is interconnected with another switching system through the top-layer node, larger-scale expansion is implemented, scalability of the switching system is improved, and occupation of a user-side port is avoided. It may be learned that the foregoing switching system may not only meet a requirement of efficient switching, but also meet a requirement of high scalability, and both high performance and scalability are considered.

Based on a same concept, embodiments of this application provide a switching network. The switching network may be applied to an apparatus such as a switch, a switching chip, or a switching frame. The switching network may include the switching system described in one or more of the foregoing embodiments.

The following uses an example in which the switching network includes a first switching system and a second switching system for description.

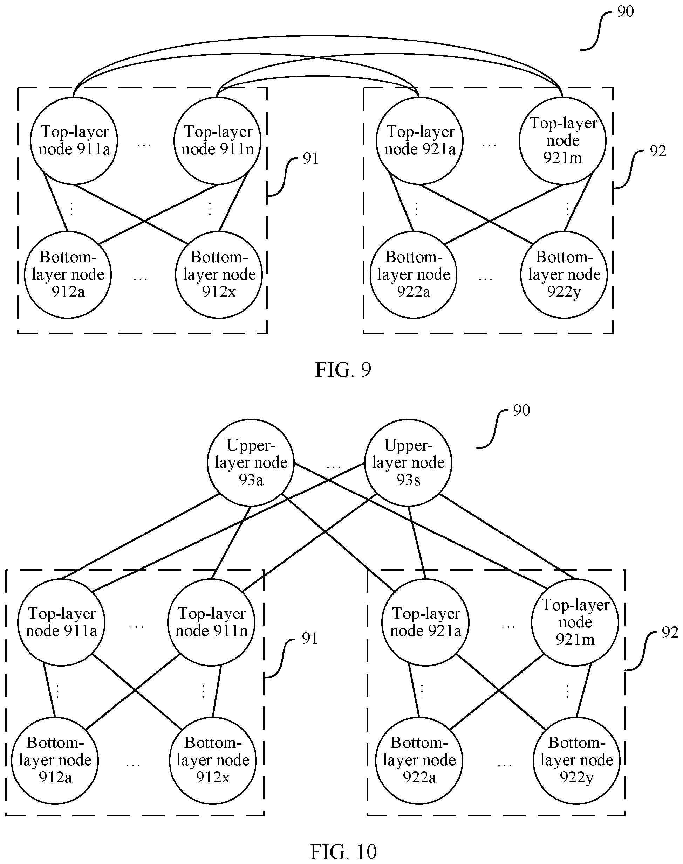

FIG. 9 is a schematic diagram of a structure of a switching network according to an embodiment of this application. In FIG. 9, the switching network 90 may include a first switching system 91 and a second switching system 92. The first switching system 91 and the second switching system 92 may be the switching system shown in FIG. 5 or FIG. 7.

Optionally, the first switching system and the second switching system may be switching systems of equal scales, or may be switching systems of different scales. For example, both the first switching system and the second switching system may be small-scale switching systems; or the first switching system may be a small-scale switching system, and the second switching system may be a large-scale switching system; or both the first switching system and the second switching system may be large-scale switching systems. The small-scale switching system may be a switching system whose node capacity is less than a preset value, and the large-scale switching system may be a switching system whose node capacity is greater than or equal to the preset value.

In some possible implementations, still refer to FIG. 9. A part or all of nodes of a top-layer node 911a to a top-layer node 911n (such as a second node) in a first switching system 91 and a top-layer node 921a to a top-layer node 921m (such as a third node) in a second switching system, the top-layer node 911a to the top-layer node 911n communicate with the top-layer node 921a to the top-layer node 921m according to a second protocol (for example, a public protocol).

Further, the first switching system 91 further includes a bottom-layer node 912a to a bottom-layer node 912x (for example, a first node), and the second switching system 92 further includes a bottom-layer node 922a to a bottom-layer node 922y (for example, a fifth node). One of the bottom-layer node 912a to a bottom-layer node 912n is connected to one or more top-layer nodes from the top-layer node 911a to the top-layer node 911n. The bottom-layer node 912a to the bottom-layer node 912x communicate with the top-layer node 911a to the top-layer node 911n according to a first protocol (for example, a proprietary protocol); and one of the bottom-layer node 922a to the bottom-layer node 922y is connected to one or more top-layer nodes of the top-layer node 921a to the top-layer node 921m. The bottom-layer node 922a to the bottom-layer node 922y communicate with the top-layer node 921a to the top-layer node 921m according to a third protocol, such as another proprietary protocol. The first protocol is different from the second protocol, and the second protocol is different from the third protocol.

During actual application, the first protocol may be a proprietary protocol of the first switching system, the second protocol may be a public protocol, the third protocol may be a proprietary protocol of the second switching system, and the first protocol may be the same as or different from the third protocol; or the first protocol, the second protocol, and the third protocol are different proprietary protocols. Certainly, the first protocol, the second protocol, and the third protocol may alternatively be different public protocols. This is not specifically limited in embodiments of this application. The following uses an example in which the first protocol may be the proprietary protocol of the first switching system, the second protocol may be the public protocol, and the third protocol may be the proprietary protocol of the second switching system.

In embodiments of this application, the bottom-layer node is configured to: communicate with user equipment, and communicate with the top-layer node according to a first proprietary protocol (for example, the first protocol);
the top-layer node is configured to: communicate with the first node according to the first proprietary protocol, and communicate with the top-layer node according to the public protocol (namely, the second protocol); and
the top-layer node is configured to: communicate with the top-layer node according to the public protocol, and communicate with the bottom-layer node according to a second proprietary protocol (namely, the third protocol).

With reference to the structure of the foregoing switching network, one bottom-layer node (for example, a source FIC) receives a first data packet from the user equipment, and parses the first data packet, to obtain a target address. Then, the bottom-layer node encapsulates the first data packet according to the first protocol, and sends the encapsulated first data packet to a top-layer node in a transmission path of the first data packet based on a destination address. Next, the top-layer node re-encapsulates the first data packet according to the second protocol, and sends the first data packet to the top-layer node in a second switching system in the transmission path of the first data packet based on the destination address. The top-layer node parses the first data packet, to obtain the target address; and the top-layer node encapsulates the first data packet according to the third protocol, and sends the first data packet to another bottom-layer node (for example, a destination FIC) in the transmission path of the first data packet based on the destination address.

In some other possible implementations, in the first switching system, one layer or more layers of intermediate nodes may be disposed between the bottom-layer node and the top-layer node; and certainly, in the second switching system, one layer or more layers of intermediate nodes may also be disposed between the bottom-layer node and the top-layer node. For detailed descriptions of the intermediate node, refer to the foregoing one or more embodiments, and details are not described herein again.

Further, FIG. 10 is another schematic diagram of a structure of a switching network according to an embodiment of this application. With reference to FIG. 9 and FIG. 10, the switching network 90 may further include an upper-layer node (for example, an upper-layer node 93a to an upper-layer node 93s). The upper-layer node 93a to the upper-layer node 93s are connected between a top-layer node 911a to a top-layer node 911n and a top-layer node 921a to a top-layer node 921m, so that a first switching system 91 and a second switching system 92 are connected through the upper-layer node.

The upper-layer node is configured to communicate with a top-layer node of the first switching system and a top-layer node of the second switching system according to a second protocol.

In this case, after re-encapsulating a first data packet according to the second protocol, the top-layer node in the first switching system may send the encapsulated first data packet to an upper-layer node in a transmission path of the first data packet based on a destination address. The upper-layer node directly forwards the received first data packet to the top-layer node in the second switching system based on the destination address. Then, the top-layer node in the second switching system re-encapsulates the first data packet according to a third protocol, and sends the re-encapsulated first data packet to a bottom-layer node (a bottom-layer node in the second switching system) in the transmission path of the first data packet based on the destination address.

In embodiments of this application, top-layer nodes of different switching systems are interconnected, so that the switching network may be expanded on a larger scale. This improves scalability of the switching system, and avoids occupation of a user-side port. In addition, because internal nodes of the switching system communicate with each other through the proprietary protocol, bandwidth utilization may be improved, a switching delay may be reduced, and performance of the switching system may be improved. It may be learned that the foregoing switching system may not only meet a requirement of efficient switching, but also meet a requirement of high scalability, and both high performance and scalability are considered.

It should be noted that in the foregoing embodiment, because the top-layer node supports two protocols, after receiving the encapsulated data packet according to the first protocol, the top-layer node further needs to perform protocol conversion on the data packet, and re-encapsulate the data packet according to the second protocol.

Based on a same invention concept, embodiments of this application further provide a switching node. The switching node may be applied to the top-layer node in one or more of the foregoing embodiments.

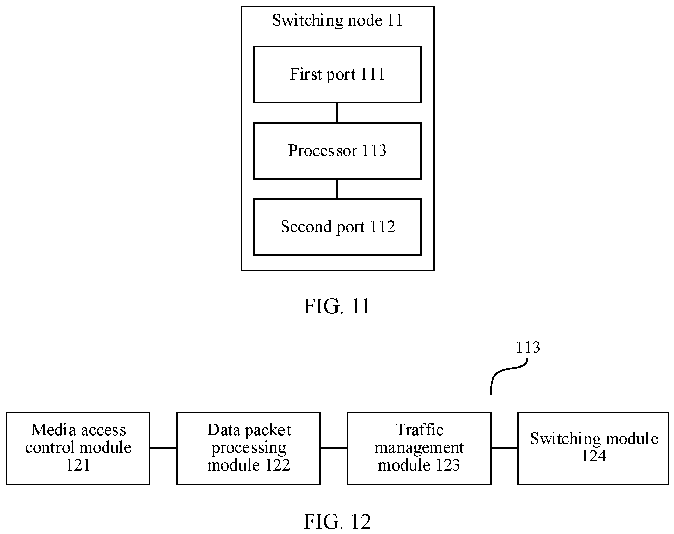

FIG. 11 is a schematic diagram of a structure of a switching node according to an embodiment of this application. In FIG. 11, the switching node 11 may include: a first port 111 that supports a first protocol, a second port 112 that supports a second protocol, and a processor 113, where the processor 113 is connected to the first port 111 and the second port 112.

The first port is configured to: receive a third data packet, and send the third data packet to the processor.

The third data packet is a data packet sent by a bottom-layer node (for example, a first node) to the first port according to the first protocol. After receiving a data packet sent by user equipment, the bottom-layer node encapsulates the data packet according to the first protocol, to obtain the third data packet, and then sends the third data packet to the first port. The first port sends the third data packet to the processor.

The processor is configured to: perform protocol conversion on the third data packet, and send the converted third data packet to the second port; and
after receiving the third data packet sent by the first port, the processor decapsulates the third data packet according to the first protocol, to obtain data in the third data packet. Then, the processor re-encapsulates the data according to the second protocol, to obtain the converted third data packet.

The second port is configured to send the converted third data packet to another switching node (for example, a top-layer node in another switching system).

For example, FIG. 12 is a schematic diagram of a structure of a processor according to an embodiment of this application. Refer to FIG. 12. The processor 113 may include a media access control (media access control, MAC) module 121, a packet processing (packet processing, PP) module 122, a traffic manager (traffic manager, TM) module 123, and a switch (switch, SW) module 124.

The MAC module is configured to: provide standard protocol interfaces, such as Ethernet data check, frame delimitation, and transmission and reception.

The PP module is configured to: perform processing on a received data packet (packet), where the processing may include: packet parsing, route selection, packet header modification, or the like.

The TM module is configured to: schedule the received traffic that enters different queues (queues) based on attributes of the received traffic, such as TCP/IP 5-tuple and destination ports, and these queues based on a specific quality of service (quality of service, QoS) policy.

The SW module is configured to: write the received data packet to a buffer (buffer) and switches the data packet to a destination port based on a scheduling result of the TM module.

Specifically, the MAC module receives the third data packet sent by the first port, and sends the third data packet to the PP module; and after receiving the third data packet sent by the MAC module, the PP module performs processing on the third data packet, for example, packet parsing, route selection, and packet header modification, to implement protocol conversion (to be specific, being converted from a first protocol to a second protocol) on the third data packet. Then, the PP module sends the converted third data packet to the TM module, and the TM module schedules the converted third data packet; and the SW module sends, based on scheduling of the TM module, the converted third data packet to a second port, and then the second port sends the converted third data packet.

Further, the PP module may include a plurality of parallel data packet processing pipelines (PP pipeline). Each PP pipeline may be divided into an uplink (ingress) pipeline and a downlink (egress) pipeline. In the uplink pipeline and the downlink pipeline, processing on data packets required by a receiving side and a sending side are respectively performed. Using the ingress pipeline as an example, an implementation is: formed by a multi-stage (multiple-stage) match/action (match/action, MA) unit. Each PP pipeline may have a specific programmable capability, and each MA unit may complete a data packet processing function based on a specific program instruction. In a word, the more layers of the MA unit, the more complex the functions supported by the PP module. Certainly, the PP module may further be implemented in another manner. This is not specifically limited in embodiments of this application.

It should be noted that the structure of the processor is merely an example structure. During actual application, there may be another case in an execution sequence of the foregoing modules, such as the TM module and the SW module, when functions are implemented. This is not specifically limited in embodiments of this application. Further, the TM module and the SW module may be two modules that are separately disposed, or may be a shared module. The module may be configured to implement functions of the TM module and the SW module. This is not specifically limited in embodiments of this application. In a specific implementation process, the processor may be a general-purpose central processing unit (CPU), a microprocessor, an application-specific integrated circuit (ASIC), or the like.

In embodiments of this application, different switching systems are interconnected through the foregoing switching nodes, so that the switching network may be expanded on a larger scale. This improves scalability of the switching system, and avoids occupation of a user-side port. In addition, because internal nodes of the switching system communicate with each other through the proprietary protocol, bandwidth utilization may be improved, a switching delay may be reduced, and performance of the switching system may be improved. It may be learned that the foregoing switching system may not only meet a requirement of efficient switching, but also meet a requirement of high scalability, and both high performance and scalability are considered.

In the foregoing embodiments, the descriptions of the embodiments have their respective focuses. For a part that is not described in detail in an embodiment, reference may be made to related descriptions in other embodiments. The foregoing descriptions are merely specific example implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A switching system, comprising: a first node and a second node, wherein one first node is connected to at least one second node;
the first node is configured to: communicate with user equipment, and communicate with the second node according to a first protocol; and
the second node is configured to: communicate with the first node according to the first protocol, and communicate with a third node in another switching system according to a second protocol, wherein
the first protocol is different from the second protocol.

2. The switching system according to claim 1, wherein
the first node is configured to: receive a first data packet from the user equipment, and send the first data packet to the second node according to the first protocol; and
the second node is configured to: receive the first data packet from the first node, and send the first data packet to the third node according to the second protocol, wherein
the second node and the third node are nodes in a transmission path of the first data packet.

3. The switching system according to claim 1 or 2, wherein the switching system further comprises a fourth node, one first node is connected to at least one fourth node, and one fourth node is connected to at least one second node; and
the fourth node is configured to communicate with the first node and the second node according to the first protocol.

4. The switching system according to claim 3, wherein
the first node is further configured to send the first data packet from the user equipment to the fourth node according to the first protocol; and
the fourth node is further configured to: receive the first data packet from the first node, and send the first data packet to the second node according to the first protocol, wherein
the fourth node is a node in the transmission path of the first data packet.

5. The switching system according to claim 1, wherein
the first node is further configured to: receive a second data packet from the user equipment, and send the second data packet to the second node according to the first protocol; and
the second node is further configured to: receive the second data packet from the first node, and send the second data packet to another first node according to the first protocol, wherein
the second node is a node in a transmission path of the second data packet.

6. The switching system according to any one of claims 1 to 5, wherein the first node is a fabric interface chip, and the second node is a switch element.

7. A switching network, comprising: a first switching system and a second switching system, wherein the first switching system comprises a first node and a second node, wherein one first node is connected to at least one second node; the second switching system comprises a third node and a fifth node, wherein one third node is connected to one second node, and one fifth node is connected to at least one third node;
the first node is configured to: communicate with user equipment, and communicate with the second node according to a first protocol;
the second node is configured to: communicate with the first node according to the first protocol, and communicate with the third node according to a second protocol; and
the third node is configured to: communicate with the second node according to the second protocol, and communicate with the fifth node according to the third protocol, wherein
the first protocol is different from the second protocol, and the second protocol is different from the third protocol.

8. The switching network according to claim 7, wherein
the first node is further configured to: receive a first data packet from the user equipment, and send the first data packet to the second node according to the first protocol; and
the second node is further configured to: receive the first data packet from the first node, and send the first data packet to the third node according to the second protocol, wherein
the third node is further configured to: receive the first data packet from the second node, and send the first data packet to the fifth node according to the third protocol, wherein
the second node, the third node, and the fifth node are nodes in a transmission path of the first data packet.

9. The switching network according to claim 7 or 8, wherein the switching network further comprises a sixth node, wherein the sixth node is connected between the second node and the third node; and
the sixth node is configured to communicate with the second node and the third node according to the second protocol.

10. The switching network according to claim 9, wherein
the second node is further configured to send the first data packet to the sixth node according to the second protocol; and
the sixth node is further configured to: receive the first data packet from the second node, and send the first data packet to the third node according to the second protocol, wherein
the sixth node is a node in the transmission path of the first data packet.

11. The switching network according to any one of claims 7 to 10, wherein a node capacity of the first switching system is less than a preset value, and a node capacity of the second switching system is greater than or equal to the preset value.

12. The switching network according to claim 11, wherein the first protocol and the third protocol are proprietary protocols; and the second protocol is a public protocol.

13. The switching network according to any one of claims 7 to 12, wherein the second node is at least a part of top-layer nodes in the first switching system; and/or the third node is at least a part of top-layer nodes in the second switching system.

14. A switching node, comprising: a first port that supports a first protocol, a second port that supports a second protocol, and a processor, wherein the processor is connected to the first port and the second port; the first protocol is different from the second protocol;
the first port is configured to: receive a third data packet, and send the third data packet to the processor, wherein the third data packet is a data packet sent by a first node according to the first protocol, and the first node is configured to communicate with user equipment according to the first protocol;
the processor is configured to: convert the third data packet from the first protocol to the second protocol, and send the converted third data packet to the second port; and
the second port is configured to send the converted third data packet to another switching node.
